# FASCICULE DE BREVET EUROPEEN

(11) **EP 3 387 238 B1**
(45) Date de publication et mention de la délivrance du brevet: **21.04.2021**
(21) Numéro de dépôt: 16825467.0
(22) Date de dépôt: 09.12.2016
(51) Int. Cl.: F02D 41/00, B60W 30/188, F02B 39/10, F02D 41/22, F02D 41/02, F02M 26/05

(54) **PROCEDE DE GESTION DE L'UTILISATION D'UN COMPRESSEUR ÉLECTRIQUE DANS UN VEHICULE DOTE D'UNE BOITE AUTOMATIQUE**
VERFAHREN ZUR VERWALTUNG DER VERWENDUNG EINES ELEKTRISCHEN VERDICHTERS IN EINEM FAHRZEUG MIT AUTOMATIKGETRIEBE
METHOD FOR MANAGING THE USE OF AN ELECTRIC COMPRESSOR IN A VEHICLE PROVIDED WITH AN AUTOMATIC GEARBOX

(30) Priorité: 11.12.2015 FR 1562189
(43) Date de publication de la demande: 17.10.2018
(73) Titulaire: Renault S.A.S., 92100 Boulogne-Billancourt (FR)
(72) Inventeur: MALLET, Philippe, 78810 Feucherolles (FR); GAIFFAS, Erwann, 78640 Saint Germain La Grange (FR)
(86) Numéro de dépôt international: PCT/FR2016/053301
(87) Numéro de publication internationale: WO 2017/098184

(56) Documents cités:
- EP-A1- 1 300 562
- EP-A1- 1 357 275
- FR-A1- 2 882 094
- JP-A- 2007 077 955

## Description

### DOMAINE TECHNIQUE DE L'INVENTION

L'invention concerne un procédé de gestion de l'utilisation d'un compresseur électrique d'un moteur à combustion interne, dans un véhicule doté d'une boîte de vitesses à changement de rapport automatique.

### ETAT DE LA TECHNIQUE

Les véhicules automobiles comportent généralement un moteur à combustion interne apte à délivrer un couple à un arbre d'entrée d'une boîte de vitesses, pour l'entraînement d'au moins une roue du véhicule.

De manière connue en soi, ces véhicules peuvent disposer, à l'admission du moteur, d'un compresseur électrique (encore appelé e-charger selon une abréviation en langue anglaise), apte à comprimer l'air d'admission du moteur pour permettre d'augmenter les performances du moteur. Cet arrangement peut concerner les moteurs du type atmosphérique. Il peut aussi concerner les moteurs du type suralimentés équipés d'un turbocompresseur classique de suralimentation, un tel turbocompresseur comprenant un compresseur à l'admission et une turbine à l'échappement, notamment pour augmenter encore davantage le couple à bas régime du moteur et les performances du véhicule.

L'utilisation prolongée d'un compresseur électrique est contrainte par un critère de température interne, qui ne doit pas dépasser une température maximale, sous peine de dégrader le compresseur et d'entraîner une perte de performance temporaire de la compression d'air.

On connaît de l'état de la technique plusieurs procédés qui visent à limiter l'utilisation d'un tel compresseur électrique pour le protéger des températures excessives. On connaît par exemple de la demande de brevet non examinée FR1561942 de la demanderesse un procédé de gestion de l'utilisation d'un compresseur électrique dans un véhicule du type hybride, doté d'un moteur thermique et d'une machine électrique réversible apte à fonctionner en mode moteur pour fournir un complément de couple au véhicule ou en mode de génératrice. Le procédé comprend une étape de fonctionnement du compresseur à une puissance nominale donnée ; une étape de mesure de la température du compresseur électrique ; une étape de mise en fonctionnement du compresseur à une puissance inférieure à la puissance nominale donnée, dès qu'il a atteint une température maximale prédéfinie ; et, une étape de mise en fonctionnement de la machine électrique en complément du moteur thermique, pour pallier la perte de puissance fournie par le compresseur électrique

FR 2 882 094 A1 mentionne qu'il est connu de limiter la puissance fournie par un moteur à un compresseur électrique de suralimentation de moteur thermique quand la température indiquée par un capteur atteint une valeur donnée.

EP 1 300 562 A1 divulgue une méthode pour optimiser le fonctionnement d'un compresseur électrique à la fois en termes de performances et de consommation d'énergie, un tel compresseur nécessitant bien plus d'énergie que celle qui est habituellement disponible dans une batterie classique d'alternateur.

EP 1 357 275 A1 divulgue un modèle thermique d'un moteur d'entraînement d'un compresseur électrique, apte à déterminer la température d'un tel moteur.

JP 2007 077955 A divulgue un procédé de contrôle d'un moteur thermique équipé d'un compresseur électrique.

Un tel procédé, dans lequel on abaisse le couple thermique, c'est-à-dire le couple fourni par le moteur thermique, permet de préserver le compresseur des températures excessives, tout en maintenant les performances du véhicule, dans la mesure où la perte de puissance du véhicule qui en résulterait est entièrement compensée par un apport de couple électrique. Mais il n'est utilisable que dans le cas d'une motorisation du type hybride.

### RESUME DE L'INVENTION

L'invention propose de remédier aux défauts des procédés connus de gestion de l'utilisation d'un compresseur électrique, pour les véhicules équipés d'un unique moteur thermique associé à une boîte de vitesses à changement de rapport automatique.

Elle propose pour cela un procédé de gestion de l'utilisation d'un compresseur électrique d'un moteur à combustion interne de véhicule automobile comportant une boîte de vitesses à changement de rapport automatique, ledit compresseur étant monté dans le circuit d'admission du moteur afin d'augmenter les performances dudit moteur, ledit procédé comportant successivement, lors d'une phase de roulage du véhicule, des étapes au cours desquelles :
On utilise le compresseur électrique à une puissance non-nulle ;
On détermine une valeur de température du compresseur ; et,
On modifie la puissance de fonctionnement du compresseur lorsque ladite température atteint un seuil de température maximale prédéfinie,
ledit procédé étant caractérisé en ce qu'il comporte en outre, lorsque ladite température atteint ledit seuil maximal, une étape de rétrogradation du rapport de boîte de vitesses, dans laquelle le régime de rotation du moteur augmente en proportion des rapports de démultiplication initial et final de la boîte, et le couple du moteur diminue dans la proportion inverse, et dans laquelle on désactive le compresseur, et après l'étape de rétrogradation du rapport de boîtes de vitesses, une étape dans laquelle, lorsque la température du compresseur électrique descend en dessous d'un second seuil de température, on déclenche un changement de rapport montant de la boîte et on réactive le compresseur.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 représente un exemple de groupe motopropulseur apte à la mise en oeuvre du procédé selon l'invention ; et,
- la figure 2 est un plan de fonctionnement régime-charge du moteur du groupe motopropulseur de la figure 1, sur lequel on a représenté la zone de fonctionnement du compresseur électrique et une courbe d'iso-puissance fournie au véhicule.

### DESCRIPTION DETAILLEE DES FIGURES

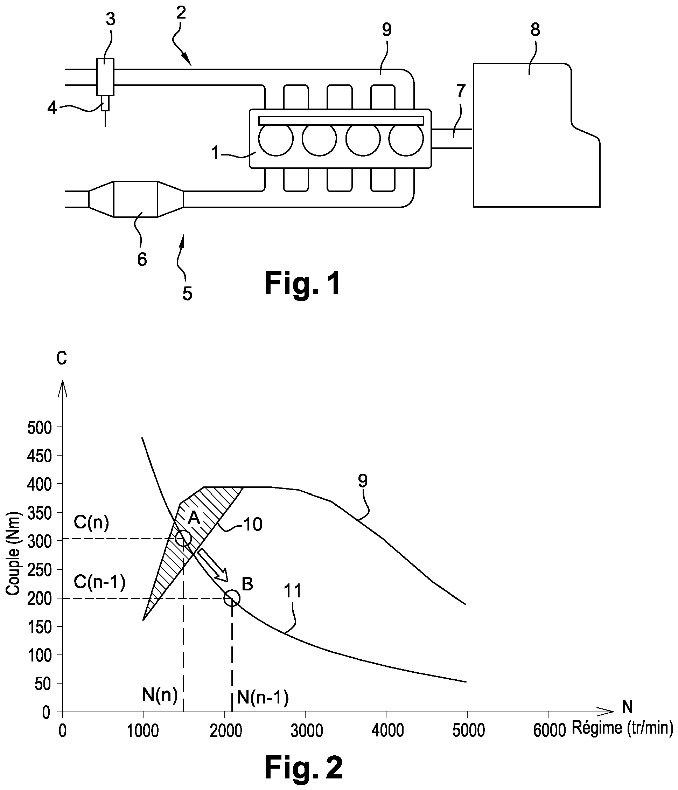

Sur la figure 1, on a représenté de manière très schématique un groupe motopropulseur apte à la mise en oeuvre du procédé selon l'invention. Il comprend un moteur 1 à combustion interne, par exemple un moteur thermique de véhicule automobile, qui se présente ici de manière non limitative sous la forme d'un moteur à quatre cylindres en ligne de type atmosphérique.

Le moteur 1 est alimenté en air par un circuit d'admission d'air 2, et en carburant, par exemple de l'essence ou du gazole, par une pluralité d'injecteurs (non représentés) débouchant dans les cylindres du moteur. Le circuit d'admission comporte un compresseur électrique 3, apte à comprimer l'air admis dans le moteur et à augmenter ainsi, quand il est actionné, le couple maximum que le moteur peut fournir. Bien entendu, le circuit d'admission 2 peut comporter aussi différents composants classiques non représentés, comme par exemple un filtre à air, une vanne d'entrée d'air et différents capteurs. Si le moteur est du type suralimenté et non pas du type atmosphérique, le circuit d'admission comporte aussi un compresseur de turbocompresseur classique, lié à la turbine du turbocompresseur.

Le compresseur électrique 3 est associé à des moyens de détermination 4 d'une valeur de sa température. Il peut s'agir d'un capteur de température monté sur le compresseur 3. En variante, on peut prévoir que le température du compresseur 3 soit estimée par un modèle, en fonction d'un ensemble de paramètres représentatifs du point de fonctionnement du moteur 1, comprenant au moins le régime et la charge (c'est-à-dire le couple), ainsi que du temps passé sur chaque point de fonctionnement du moteur.

Le moteur 1 est aussi équipé d'un circuit d'échappement 5 des gaz d'échappement, qui peut comprendre au moins un dispositif de dépollution 6 des gaz d'échappement du moteur. Bien entendu, il peut comprendre divers autres composants non représentés. En particulier si le moteur est du type suralimenté, le circuit d'échappement comprend la turbine du turbocompresseur du moteur.

Un arbre de sortie du moteur 7, par exemple une extrémité d'un vilebrequin du moteur, coopère avec un arbre d'entrée (non représenté) d'une boîte de vitesses 8 du type à changement de rapport automatique.

Il peut s'agir par exemple d'une boîte de vitesses automatique classique pourvue d'un convertisseur, ou d'une boîte robotisée, notamment une boîte à double embrayage telle que connue de l'état de la technique. Un calculateur du groupe motopropulseur (non représenté) permet de procéder automatiquement, c"est-à-dire sans action particulière du conducteur du véhicule, aux changements de rapport montants et descendants de la boîte de vitesses 7.

De manière connue en soi, le calculateur est apte à régler les paramètres de fonctionnement du moteur 1 en fonction d'un enfoncement de la pédale d'accélérateur du véhicule par le conducteur du véhicule, pour un régime du moteur donné et du rapport de boîte de vitesses courant. L'enfoncement de la pédale est traduit en un besoin de puissance à fournir au véhicule, en d'autres termes, pour un rapport de boîte engagé donné et un régime du moteur donné, à une consigne de couple moteur à fournir. Le calculateur règle alors l'admission d'air et de carburant injecté pour obtenir ce couple.

On décrit maintenant un mode de réalisation non limitatif du procédé de gestion de l'utilisation d'un compresseur électrique selon l'invention, en référence à la figure 2. Sur cette figure 2, on a représenté le plan de fonctionnement régime - charge du moteur 1. L'axe des abscisses représente le régime N du moteur (mesuré en tours/minute) et l'axe des ordonnées le couple C (mesuré en Nm). La courbe 9 représente le couple maximal que le moteur peut fournir en fonction du régime N, et la courbe 10 le couple maximal qu'il peut fournir sans utilisation du compresseur électrique 3. En d'autres termes, la zone hachurée qui est comprise entre la courbe 9 et la courbe 10 représente la zone d'utilisation du compresseur électrique, c'est-à-dire celle dans laquelle il doit être activé pour augmenter le couple du moteur.

L'enfoncement de la pédale d'accélérateur par le conducteur se traduit par un besoin de puissance P à fournir au véhicule. La courbe 11 représente la courbe d'iso-puissance P dans le plan régime-charge du moteur. Pour un rapport de boîte engagé prédéterminé n et pour le régime N courant du moteur, la puissance P correspond à un couple moteur C(n) donné. Si le point de fonctionnement A du moteur, correspondant à ce e couple C(n), se trouve dans la zone d'utilisation du compresseur électrique 3 comme il apparaît sur la figure 2, le compresseur s'échauffe progressivement jusqu'à atteindre potentiellement une température maximale à laquelle il risque de se dégrader.

Selon l'invention, on évite un tel dépassement de la température et une telle dégradation en provoquant automatiquement une rétrogradation du rapport de la boîte de vitesses 8 lorsque la valeur mesurée ou estimée de la température du compresseur atteint un seuil de température prédéterminé. Le point de fonctionnement du moteur se déplace de la position A vers une nouvelle position B itué sur la courbe d'iso-puissance 11, de sorte que les performances du moteur ne sont pas modifiées. Ce nouveau point de fonctionnement correspond à un nouveau régime N(n-1) qui est augmenté par rapport au régime précédent N(n) du point A dans les proportions des rapports initial n et final n-1 de démultiplication de la boîte de vitesse, tandis que le couple moteur est abaissé de la valeur C(n) à une nouvelle valeur C(n-1) dans les proportions inverses. En d'autres termes, ces régimes et ces couples vérifient l'équation : C(n) * N(n) = C(n-1) * N(n)

Ce changement de rapport descendant, qui est opéré dès que la température du compresseur électrique atteint un seuil prédéterminé, permet ainsi, sans modifier les performances du véhicule, de sortir le compresseur électrique de la zone de fonctionnement hachurée sur la figure 2, c'est-à-dire de le désactiver.

Bien entendu, dès que le compresseur est suffisamment refroidi, par exemple lorsque sa température descend en dessous d'un second seuil de température, qui peut être inférieur au seuil de déclenchement du changement de rapport descendant, un changement de rapport montant peut être engagé, de manière à augmenter le couple, en réactivant le fonctionnement du compresseur. Par exemple cette étape du procédé peut être prévue en vue de diminuer la consommation de carburant du véhicule ou d'augmenter le potentiel d'accélération du véhicule.

## Revendications

1. Procédé de gestion de l'utilisation d'un compresseur électrique (3) d'un moteur à combustion interne (1) de véhicule automobile comportant une boîte de vitesses (8) à changement de rapport automatique, ledit compresseur étant monté dans le circuit d'admission (2) du moteur afin d'augmenter les performances dudit moteur, ledit procédé comportant successivement, lors d'une phase de roulage du véhicule, des étapes au cours desquelles :
- On utilise le compresseur électrique (3) à une puissance non-nulle ;
- On détermine une valeur de température du compresseur (3) ; et,
- On modifie la puissance de fonctionnement du compresseur (3) lorsque ladite température atteint un seuil de température maximale prédéfinie,
- **CARACTERISE EN CE QUE**
ledit procédé comporte en outre :
- lorsque ladite température atteint ledit seuil maximal, une étape de rétrogradation du rapport de la boîte de vitesses, dans laquelle le régime de rotation (N) du moteur augmente en proportion des rapports de démultiplication initial et final de la boîte, et le couple (C) du moteur diminue dans la proportion inverse, et dans laquelle on désactive le compresseur ; et,
- après l'étape de rétrogradation du rapport de boîtes de vitesses, une étape dans laquelle, lorsque la température du compresseur électrique descend en dessous d'un second seuil de température, on déclenche un changement de rapport montant de la boîte et on réactive le compresseur.

2. Procédé de gestion selon la revendication 1, **caractérisé en ce que** la température du compresseur électrique (3) est mesurée par un capteur de température, ou estimée par un modèle en fonction d'un ensemble de paramètres représentatifs du point de fonctionnement du moteur comprenant au moins le régime (N) et le couple (C), et du temps de fonctionnement du compresseur audit point de fonctionnement.

3. Procédé selon l'une quelconque des revendications précédentes, dans lequel le second seuil est inférieur au seuil de température maximale prédéfinie.

## Patentansprüche

1. Verwaltungsverfahren der Verwendung eines elektrischen Kompressors (3) eines Verbrennungsmotors (1) eines Kraftfahrzeugs, das ein Automatikgetriebe (8) aufweist, wobei der Kompressor in den Ansaugkreislauf (2) des Motors montiert ist, um die Leistungsfähigkeiten des Motors zu erhöhen, wobei das Verfahren nacheinander in einer Fahrphase des Fahrzeugs Schritte aufweist, während denen:
- der elektrische Kompressor (3) bei einer Leistung ungleich Null verwendet wird;
- ein Temperaturwert des Kompressors (3) bestimmt wird; und
- die Betriebsleistung des Kompressors (3) verändert wird, wenn die Temperatur eine vordefinierte maximale Temperaturschwelle erreicht,
**dadurch gekennzeichnet, dass** das Verfahren außerdem enthält:
- wenn die Temperatur die maximale Schwelle erreicht, einen Schritt der Rückschaltung des Gangs des Getriebes, in dem die Drehzahl (N) des Motors im Verhältnis zu den Anfangs- und Endübersetzungsverhältnissen des Getriebes zunimmt und das Drehmoment (C) des Motors im umgekehrten Verhältnis abnimmt, und in dem der Kompressor deaktiviert wird; und
- nach dem Schritt der Rückschaltung des Getriebegangs einen Schritt in dem, wenn die Temperatur des elektrischen Kompressors unter eine zweite Temperaturschwelle sinkt, ein Hochschalten des Getriebes ausgelöst und der Kompressor reaktiviert wird.

2. Verwaltungsverfahren nach Anspruch 1, **dadurch gekennzeichnet, dass** die Temperatur des elektrischen Kompressors (3) von einem Temperaturfühler gemessen oder von einem Modell abhängig von einer Gruppe von für den Betriebspunkt des Motors repräsentativen Parametern, die mindestens die Drehzahl (N) und das Drehmoment (C) enthält, und von der Betriebszeit des Kompressors am Betriebspunkt geschätzt wird.

3. Verfahren nach einem der vorhergehenden Ansprüche, bei dem die zweite Schwelle niedriger ist als die vordefinierte maximale Temperaturschwelle.

## Claims

1. Method for managing the use of an electric compressor (3) of a motor vehicle internal combustion engine (1) comprising an automatic gear shift gearbox (8), said compressor being mounted in the intake circuit (2) of the engine in order to increase the performance of said engine, said method successively comprising, in the course of a rolling phase of the vehicle, steps during which:
- the electric compressor (3) is used at a non-zero power;
- a temperature value of the compressor (3) is determined; and
- the operating power of the compressor (3) is modified when said temperature reaches a predefined maximum temperature threshold,
**characterized in that** said method additionally comprises:
- when said temperature reaches said maximum threshold, a step of downshifting the gearbox, in which the rotational speed (N) of the engine increases in proportion to the initial and final reduction ratios of the gearbox, and the torque (C) of the engine decreases in the inverse proportion, and in which the compressor is deactivated; and
- after the step of downshifting the gearbox, a step in which, when the temperature of the electric compressor drops below a second temperature threshold, an upshift of the gearbox is triggered and the compressor is reactivated.

2. Management method according to Claim 1, **characterized in that** the temperature of the electric compressor (3) is measured by a temperature sensor, or estimated by a model as a function of a set of parameters representative of the operating point of the engine, comprising at least the speed (N) and the torque (C), and of the operating time of the compressor at said operating point.

3. Method according to either one of the preceding claims, in which the second threshold is lower than the predefined maximum temperature threshold.
